# EUROPEAN PATENT APPLICATION

(11) **EP 3 115 133 A1**
(43) Date of publication of application: **11.01.2017**
(21) Application number: 16177747.9
(22) Date of filing: 04.07.2016
(51) Int. Cl.: B22F 7/00, B22F 9/00, C09D 1/00

(54) **COATING PROCESS AND COATED COMPONENT**

(30) Priority: 10.07.2015 US 201514796498
(71) Applicant: General Electric Company, Schenectady, NY 12345 (US)
(72) Inventor: GERMANN, Bryan Joseph, Greenville, SC South Carolina 29615 (US); DIMASCIO, Paul Stephen, Greenville, SC South Carolina 29615 (US)
(74) Representative: Pöpper, Evamaria

(57) **Abstract**

A coating processes and coated components (103) are disclosed. The coating process includes applying a suspension to an operationally-used surface, the suspension having one or more solvents, nano-materials, a plasticizer, a binder, and a dispersant suspending nano-materials within the suspension, applying heat to the suspension thereby removing liquids from the suspension, wherein solids are maintained on the surface after the applying of the heat, and sintering the solids on the surface to produce a coating (101). The coated component (103) includes a substrate and a coating (101) formed on the substrate by sintering of solids, the solids being positioned by application and heating of a suspension to an operationally-used surface, the suspension having one or more solvents, nano-materials, a plasticizer, a binder, and a dispersant suspending nano-materials within the suspension.

## Description

### FIELD OF THE INVENTION

The present invention is directed to coatings. More particularly, the present invention is directed to coating processes and coated components.

### BACKGROUND OF THE INVENTION

Ink and slurries have long been used for producing thick coatings to generate protective layers. Such coatings can be dense or have porosity. The thickness, density, and/or porosity can produce undesirable properties for specific intended applications.

For example, such techniques have not previously provided low enough roughness, have resulted in varying cross-sectional thicknesses, have not provided robust enough coatings for industrial heavy machinery, have not been able to be used as thermal barrier coating materials for hot gas path components in industrial gas turbines, have been limited in flexibility with regard to viscosity, and/or have not been sufficiently resistant to expansion and contraction (either elastic or plastic deformation).

### BRIEF DESCRIPTION OF THE INVENTION

In an embodiment, a coating process includes applying a suspension to an operationally-used surface, the suspension having one or more solvents, nano-materials, a plasticizer, a binder, and a dispersant suspending nano-materials within the suspension, applying heat to the suspension thereby removing liquids from the suspension, wherein solids are maintained on the surface after the applying of the heat, and sintering the solids on the surface to produce a coating.

In another embodiment, a coating process includes applying a suspension to a surface, the suspension having one or more solvents, nano-materials, a plasticizer, a binder, and a dispersant suspending nano-materials within the suspension, applying heat to the suspension thereby removing liquids from the suspension, the heat being at least 49 °C (120°F), wherein solids are maintained on the surface after the applying of the heat, and sintering the solids on the surface to produce a coating.

In another embodiment, a coated component includes a substrate and a coating formed on the substrate by sintering of solids, the solids being positioned by application and heating of a suspension to an operationally-used surface, the suspension having one or more solvents, nano-materials, a plasticizer, a binder, and a dispersant suspending nano-materials within the suspension.

Other features and advantages of the present invention will be apparent from the following more detailed description, taken in conjunction with the accompanying drawings which illustrate, by way of example, the principles of the invention.

### BRIEF DESCRIPTION OF THE DRAWINGS

FIGS. 1-2 are micrographs of embodiments of a coated component having a substrate with a NiCoCrAlY alloy, according to the disclosure.
FIGS. 3-5 are micrographs of embodiments of a coated component having a substrate with a gel aluminide, according to the disclosure.
FIG. 6 shows an embodiment of a coating being vertically-cracked, according to the disclosure.

Wherever possible, the same reference numbers will be used throughout the drawings to represent the same parts.

### DETAILED DESCRIPTION OF THE INVENTION

Provided are a coating process and a coated component. Embodiments of the present disclosure, for example, in comparison to concepts failing to include one or more of the features disclosed herein, provide low enough roughness, provide more uniform cross-sectional thicknesses, provide robust enough coatings for industrial heavy machinery, are able to be used as thermal barrier coating materials for hot gas path components in industrial gas turbines, have flexibility with regard to viscosity, and/or are sufficiently resistant to expansion and contraction (either elastic or plastic deformation).

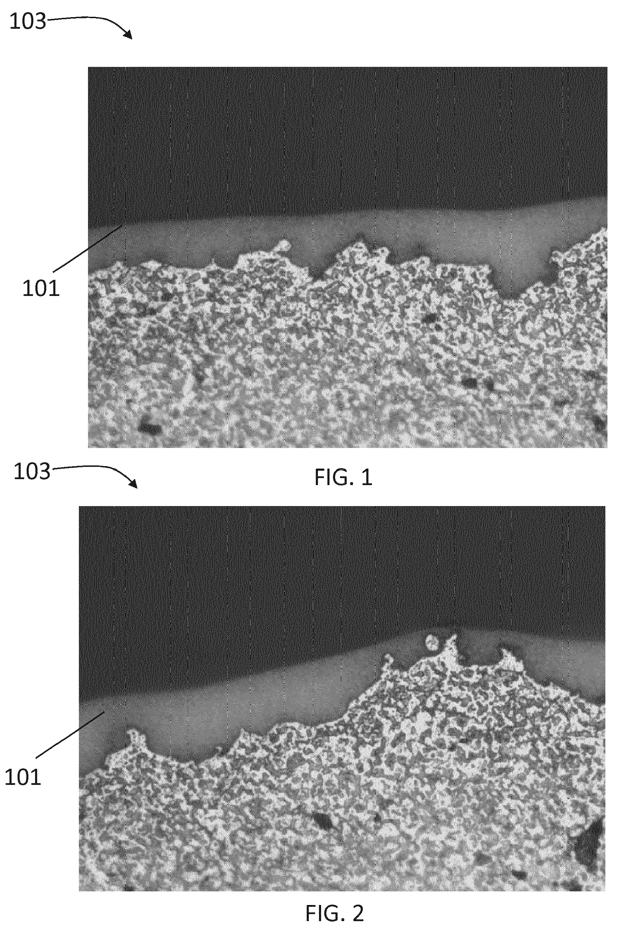

According to an embodiment, a coating process includes applying a suspension to an operationally-used surface to produce a coating 101 on a coated component 103 (see FIGS. 1-5). The process more specifically includes applying heat to the suspension, thereby removing liquids from the suspension. Solids are maintained on the operationally-used surface after the applying of the heat, the solids are sintered on the operationally-used surface to produce the coating 101.

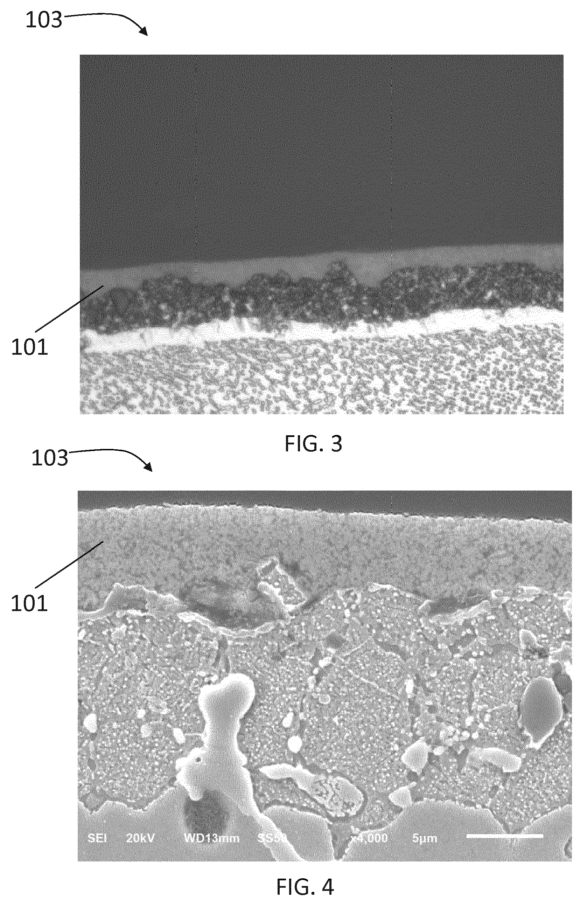

The operationally-used surface is any suitable material capable of being coated by the coating process. Suitable materials include, but are not limited to, ceramics, nickel, aluminum-based materials, nickel-based superalloys, NiCoCrAlY alloys (see FIGS. 1-2), and gel aluminides (see FIGS. 3-5). As used herein, the term "operationally-used" refers to having prior exposure to conditions of use, such as, temperature and pressure for a specified purpose. For example, in one embodiment, the operationally-used surface has been exposed to pressures and temperatures of a hot gas path of a gas turbine or otherwise within turbomachinery.

The suspension applied to the operationally-used surface has one or more solvents, nano-materials (for example, powders, spheres, fibers, and/or rods), a plasticizer, a binder, and a dispersant suspending nano-materials within the suspension. In one embodiment, the suspension has a composition of, by weight, less than 1 % being the dispersant, less than 1% being the binder, and less than 1% being the plasticizer. In one embodiment, the suspension is or includes a green ceramic, for example, applied line-by-line to a substrate and having variation in coating thickness or weaker spots that ultimately are at least partially mitigated upon flashing of at least a portion of the solvent.

In one embodiment, the solvent within the suspension includes a higher-flash solvent and a lower-flash solvent, at a concentration, by weight of the entire suspension, of less than 10% being the higher-flash solvent and greater than 25% being the lower-flash solvent. Other suitable concentrations are between 25% and 55% lower-flash solvent, between 25% and 35% lower-flash solvent, or any suitable combination, sub-combination, range, or sub-range therein.

The suspension is applied through any suitable technique. Suitable techniques include, but are not limited to, spraying, wiping, brushing, additive processes, and/or any technique other than high-velocity oxy fuel spray or plasma spray. During or after being applied, the suspension is heated, thereby removing liquids from the suspension, the heat being at a temperature greater than the higher-flash solvent flash point (for example, at least 49 °C (120°F) and/or at least 66 °C (150°F)). After the heating, the solids are maintained on the operationally-used surface.

The solids have dimensions, structure, properties, and/or compositions suitable for the intended application. In one embodiment, the solids have a maximum dimension of less than 100 nanometers. In another embodiment, the solids have a maximum dimension of less than 800 nanometers. In one embodiment, the solids include yttria-stabilized zirconia and/or a nickel-based super alloy.

The sintering of the solids is at a suitable temperature relative to the melting temperature of the solids and/or based upon a measurable temperature. For example, in one embodiment, the temperature is at least 80% of the melting temperature of the solids. Additionally or alternatively, in another embodiment, the temperature is at least 1093 °C (2,000°F) or at least 1315 °C (2,400°F).

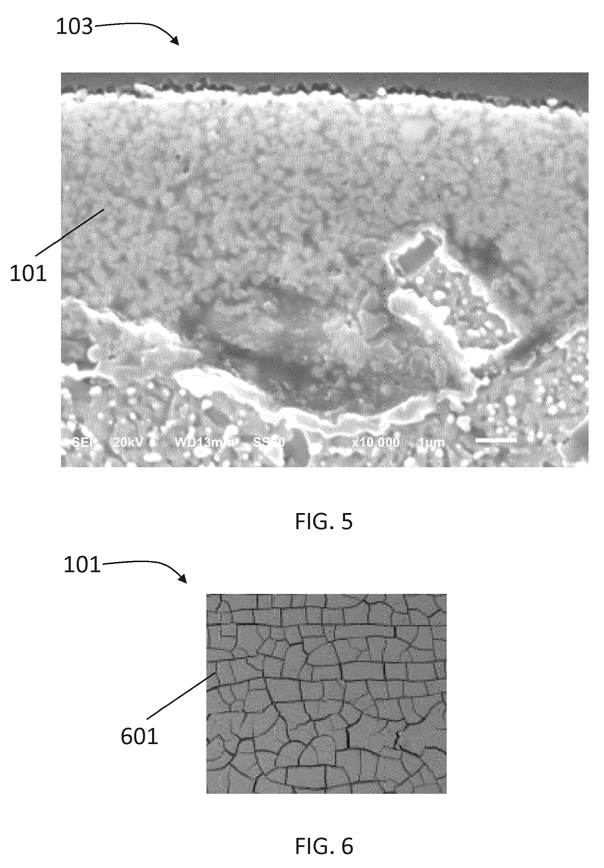

The coating 101 is produced by the coating process. In one embodiment, as shown in FIG. 6, the coating 101 is vertically-cracked and strain-tolerant by having cracks 601 that allow for expansion and contraction without delamination. As used herein, the term "vertically-cracked" refers to having intermittent breaks allowing material to maintain bond with a surface even in the presence of relatively large deformation where shear stress through the material thickness is considerably lower than the bond strength of the material with the substrate. For example, being vertically-cracked permits propagation from links between nano-scale particles, thereby not completely exposing the surface to the environment. In one embodiment, the cracks 501 are induced by a technique, for example, using flash infrared techniques and/or furnace cycling.

Suitable thicknesses for the coating 101 include, but are not limited to, less than 100 micrometers, less than 200 micrometers, less than 15 micrometers, or any suitable combination, sub-combination, range, or sub-range therein. In one embodiment, the coating 101 is a thermal barrier coating positioned on a turbomachinery component.

While the invention has been described with reference to one or more embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. In addition, all numerical values identified in the detailed description shall be interpreted as though the precise and approximate values are both expressly identified.

Various aspects and embodiments of the present invention are defined by the following clauses:
1. A coating process, comprising:
   applying a suspension to an operationally-used surface, the suspension having one or more solvents, nano-materials, a plasticizer, a binder, and a dispersant suspending nano-materials within the suspension;
   applying heat to the suspension thereby removing liquids from the suspension, wherein solids are maintained on the operationally-used surface after the applying of the heat; and
   sintering the solids on the operationally-used surface to produce a coating.
2. The coating process of clause 1, further comprising vertically-cracking the coating.
3. The coating process of clause 1, wherein the suspension has a composition of, by weight, less than 1% being the dispersant, less than 1% being the binder, and less than 1% being the plasticizer.
4. The coating process of clause 1, wherein the solvent includes a higher-flash solvent and a lower-flash solvent, at a concentration, by weight of the entire suspension, of less than 10% being the higher-flash solvent and greater than 25% being the lower-flash solvent.
5. The coating process of clause 1, wherein the applying of the suspension is by spraying, wiping, or brushing.
6. The coating process of clause 1, wherein the sintering is at a temperature of at least 80% of the melting temperature of the solids.
7. The coating process of clause 1, wherein the sintering is at a temperature of at least 1315°C (2,400°F).
8. The coating process of clause 1, wherein the sintering is at a temperature of at least 1093°C (2,000°F).
9. The coating process of clause 1, wherein the solids have a maximum dimension of less than 100 nanometers.
10. The coating process of clause 1, wherein the solids have a maximum dimension of less than 800 nanometers.
11. The coating process of clause 1, wherein the solids include yttria-stabilized zirconia.
12. The coating process of clause 1, wherein the solids include a nickel-based super alloy.
13. The coating process of clause 1, wherein the nano-material includes one or more of powder, spheres, fiber, and rods.
14. The coating process of clause 1, wherein the coating has a thickness of less than 100 micrometers.
15. The coating process of clause 1, wherein the coating has a thickness of less than 200 micrometers.
16. The coating process of clause 1, wherein the coating has a thickness of less than 15 micrometers.
17. The coating process of clause 1, wherein the applying of the suspension is by a technique other than high-velocity oxy fuel spray or plasma spray.
18. The coating process of clause 1, wherein the coating is a thermal barrier coating positioned on a turbomachinery component.
19. A coating process, comprising:
   applying a suspension to an operationally-used surface, the suspension having one or more solvents, nano-materials, a plasticizer, a binder, and a dispersant suspending nano-materials within the suspension;
   applying heat to the suspension thereby removing liquids from the suspension, the heat being at least 49°C (120°F), wherein solids are maintained on the operationally-used surface after the applying of the heat; and
   sintering the solids on the operationally-used surface to produce a coating.
20. A coated component, comprising:
   a substrate; and
   a coating formed on the substrate by sintering of solids, the solids being positioned by application and heating of a suspension to an operationally-used surface, the suspension having one or more solvents, nano-materials, a plasticizer, a binder, and a dispersant suspending nano-materials within the suspension.

## Claims

1. A coating process, comprising:
applying a suspension to an operationally-used surface, the suspension having one or more solvents, nano-materials, a plasticizer, a binder, and a dispersant suspending nano-materials within the suspension;
applying heat to the suspension thereby removing liquids from the suspension, wherein solids are maintained on the operationally-used surface after the applying of the heat; and
sintering the solids on the operationally-used surface to produce a coating (101).

2. The coating process of claim 1, further comprising vertically-cracking the coating (101).

3. The coating process of claim 1, wherein the suspension has a composition of, by weight, less than 1% being the dispersant, less than 1% being the binder, and less than 1% being the plasticizer.

4. The coating process of claim 1, wherein the solvent includes a higher-flash solvent and a lower-flash solvent, at a concentration, by weight of the entire suspension, of less than 10% being the higher-flash solvent and greater than 25% being the lower-flash solvent.

5. The coating process of claim 1, wherein the applying of the suspension is by spraying, wiping, or brushing.

6. The coating process of claim 1, wherein the sintering is at a temperature of at least 80% of the melting temperature of the solids.

7. The coating process of claim 1, wherein the sintering is at a temperature of at least 1315 °C (2,400°F).

8. The coating process of claim 1, wherein the solids have a maximum dimension of less than 100 nanometers.

9. The coating process of claim 1, wherein the solids have a maximum dimension of less than 800 nanometers.

10. The coating process of claim 1, wherein the solids include yttria-stabilized zirconia.

11. The coating process of claim 1, wherein the solids include a nickel-based super alloy.

12. The coating process of claim 1, wherein the nano-material includes one or more of powder, spheres, fiber, and rods.

13. The coating process of claim 1, wherein the coating (101) has a thickness of less than 200 micrometers.

14. The coating process of claim 1, wherein the applying of the suspension is by a technique other than high-velocity oxy fuel spray or plasma spray.

15. The coating process of claim 1, wherein the coating (101) is a thermal barrier coating positioned on a turbomachinery component.
